# EUROPEAN PATENT APPLICATION

(11) **EP 4 625 759 A1**
(43) Date of publication of application: **01.10.2025**
(21) Application number: 25166384.5
(22) Date of filing: 26.03.2025
(51) Int. Cl.: H02J 9/06

(54) **UNINTERRUPTIBLE POWER SOURCE AND METHOD FOR SUPPRESSING INTERFERENCE IN AN UNINTERRUPTIBLE POWER SOURCE**

(30) Priority: 28.03.2024 CN 202410381089
(71) Applicant: Lian Zheng Electronic (Shenzhen) Co., Ltd., Shenzhen, Guangdong 518101 (CN)
(72) Inventor: XU, ZHIREN, 518101 SHENZHEN (CN); TIAN, MENG, 518101 SHENZHEN (CN); TIAN, YANJUN, 518101 SHENZHEN (CN)
(74) Representative: Schwan Schorer & Partner mbB

(57) **Abstract**

An uninterruptible power source (100) and a method for suppressing interference in an uninterruptible power source (100) are provided, the uninterruptible power source (100) including an input switch (103), an output switch (105), and an automatic voltage regulator (104) connected between the input switch (103) and the output switch (105), and the uninterruptible power source (100) being configured such that: in the case of the automatic voltage regulator (104) working, when an abnormality of an input voltage is detected, the output switch (105) is connected to a side of the battery (108) to enter a second battery mode, waiting is performed for a first time, and then states of the step-up switch (104a), the step-down switch (104b), and the transformer (Tr) switch of the automatic voltage regulator (104) are controlled according to the input voltage; and waiting is performed for a second time greater than the first time, and then a state of the input switch (103) is controlled according to the input voltage.

## Description

### Technical Field

The present disclosure relates to the field of uninterruptible power sources, and more particularly, to an on-line interactive uninterruptible power source and a method for suppressing interference in an uninterruptible power source.

### Background Art

The statements in this section are only intended to provide background information related to the disclosure to assist in understanding the present disclosure, and such background information does not necessarily constitute prior art.

In the backup uninterruptible power source (UPS), when the mains power exists, an output voltage follows an input voltage. Since the UPS has no regulation capability, in the regions with severe grid conditions, when a voltage of the mains power exceeds a range that can be endured by a load, the load will be damaged. In order to solve this problem, an on-line interactive UPS is proposed, which is added with an automatic voltage regulator (AVR) between input and output. When a range of the mains power is out of an allowable range, the automatic voltage regulator will be connected to a UPS circuit to regulate the output voltage and enhance the protection of an output load.

### Summary of the Invention

In accordance with the above-mentioned problems of the prior art, the present disclosure provides an uninterruptible power source, including an input switch, an output switch, and an automatic voltage regulator connected between the input switch and the output switch, the output switch being selectively connected to one of the automatic voltage regulator and a battery, the automatic voltage regulator including a step-up switch, a step-down switch, and a transformer switch, and the uninterruptible power source being configured such that:
in the case of the automatic voltage regulator working, when an abnormality of an input voltage is detected, the output switch is connected to a side of the battery to enter a second battery mode, waiting is performed for a first time, and then states of the step-up switch, the step-down switch, and the transformer switch are controlled according to the input voltage; and waiting is performed for a second time, and then a state of the input switch is controlled according to the input voltage, wherein the second time is greater than the first time.

In one embodiment, after waiting is performed for the first time, if the input voltage is not within a safe range, waiting is continued for a third time, and then the states of the step-up switch, the step-down switch, and the transformer switch are controlled according to the input voltage.

In one embodiment, the states of the step-up switch, the step-down switch, and the transformer switch are changed according to the input voltage if the input voltage is within a safe range, and the uninterruptible power source controls the output switch to switch to a side of the automatic voltage regulator after working in the second battery mode for at least a battery mode minimum working time.

In one embodiment, after waiting is continued for the third time, if the input voltage is not within the safe range, the transformer switch is controlled to turn off, the step-up switch and the step-down switch are in a normal mode, and the uninterruptible power source continues to work in the second battery mode.

In one embodiment, after waiting is performed for a second time, if the input voltage is within a safe range, the input switch is kept on; and if the input voltage is not within the safe range, the input switch is turned off.

In one embodiment, the uninterruptible power source continues to read a state of the input voltage after the input switch is turned off, and the input switch is turned on if the input voltage is within the safe range.

In one embodiment, an input voltage abnormality flag bit is set to determine whether the input voltage is within a safe range by determining whether the input voltage abnormality flag bit is zero cleared.

In one embodiment, the second time is greater than or equal to a time for the automatic voltage regulator to decay or reset an excitation current after the input voltage is de-energized, and the second time is less than a sum of the first time and the third time.

In one embodiment, the step-up switch and the step-down switch switch states when a phase of the input voltage is 80°-100° or 260°-280°.

The present disclosure further provides a method for suppressing interference in an uninterruptible power source, including: in the case of an automatic voltage regulator in the uninterruptible power source working, when an abnormality of an input voltage is detected, an output switch of the uninterruptible power source is controlled to be connected to a side of a battery, waiting is performed for a first time, and then states of a step-up switch, a step-down switch, and a transformer switch of the automatic voltage regulator are controlled according to the input voltage; and waiting is performed for a second time, and then a state of an input switch of the uninterruptible power source is controlled according to the input voltage, wherein the second time is greater than the first time.

The method for suppressing interference in an uninterruptible power source of the present disclosure can eliminate the source of interference by improving the logic to eliminate excitation energy without adding extra lines, i.e. without adding any cost.

### Brief Description of the Drawings

FIG. 1 shows a schematic diagram of an on-line interactive UPS according to one embodiment.
FIG. 2 shows a flowchart of a method for suppressing interference in an uninterruptible power source according to one embodiment of the present disclosure.
FIG. 3 shows a waveform schematic diagram when the mains power jumps from a low voltage to a high voltage in the prior art.
FIG. 4 shows a waveform schematic diagram of the mains power in case of a high voltage power dropout in the prior art.
FIG. 5 shows a waveform schematic diagram when the mains power jumps from a low voltage to a high voltage using the method of the present disclosure.
FIG. 6 shows a waveform schematic diagram of the mains power in case of a high voltage power dropout using the method of the present disclosure.

### Detailed Description of the Invention

In order that the objects, technical solutions and advantages of the present disclosure may be more clearly understood, the present disclosure will be described in further detail below in combination with the detailed embodiments with reference to accompanying drawings. It should be noted that embodiments given by the present disclosure are for illustrative purposes only and do not limit the scope of protection of the present disclosure.

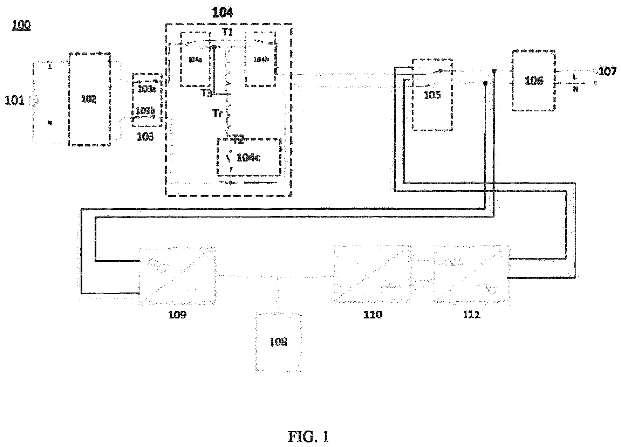

FIG. 1 shows a schematic diagram of an on-line interactive UPS according to one embodiment. As shown in FIG. 1, the on-line interactive UPS 100 includes an input EMI filter 102, an input (safety) switch 103, an automatic voltage regulator 104, an output switch 105, and an output EMI filter 106, which are sequentially connected between an alternating current (AC) input end 101 and an alternating current output end 107. The alternating current input end 101 is used to receive an input voltage, such as mains power, as will be explained below by way of example. The alternating current output end 107 is used to output alternating current power to a load. The UPS 100 further includes a charging branch including a charger 109 and a battery 108, the charger 109 being connected at one end to the battery 108 and at the other end to a node between the switch 105 and the output EMI filter 106. The UPS 100 also includes a discharging branch including the battery 108, a DC/DC converter 110, and an inverter 111 connected sequentially, wherein the output switch 105 is capable of selectively connecting one of the automatic voltage regulator 104 and the inverter 111 to the alternating current output end 107. The on-line interactive UPS 100 further includes a control unit (not shown) for controlling the operation of the UPS, and the control unit may be, for example, a microprocessor unit (MCU).

In one embodiment, the input switch 103 is configured as a double pole single throw relay or includes a switch unit 103a and a switch unit 103b. In one embodiment, the output switch 105 is a relay.

The detailed structure of the automatic voltage regulator 104 is shown in FIG. 1, and the automatic voltage regulator 104 includes a transformer Tr, a step-up switch 104a, a step-down switch 104b, and a transformer switch 104c. Wherein, the step-up switch 104a is operable to connect the input switch 103 to one of a first end T1 and a tap T3 of the transformer Tr; the step-down switch 104b is operable to connect the output switch 105 to one of the first end T1 and the tap T3 of the transformer Tr; one end of the transformer switch 104c is connected to a second end T2 of the transformer Tr, and the other end of the transformer switch 104c is connected between the input switch 103 and the output switch 105. The automatic voltage regulator 104 can be connected to or disconnected from the UPS 100 by configuring the transformer switch 104c; by configuring the step-up switch 104a and the step-down switch 104b, the automatic voltage regulator 104 can be made to operate in either a step-up mode or a step-down mode. In one embodiment, the step-up switch 104a, the step-down switch 104b, and the transformer switch 104c are relays.

Although a specific structure of the automatic voltage regulator 104 is shown in FIG. 1, it should be understood by a person skilled in the art that this structure is exemplary only, and that other structures of automatic voltage regulators may be used in practice. The automatic voltage regulator typically includes a transformer, a step-up switch, a step-down switch and a transformer switch.

The mode of operation of the UPS 100 is described in more detail below in conjunction with FIG. 1.
(1) When a voltage of the mains power is within a normal range, the on-line interactive UPS 100 is controlled to be in a normal mode. Therein, the input switch 103 is controlled to be turned on and the output switch 105 is controlled to connect the automatic voltage regulator 104 to the alternating current output end 107. The transformer switch 104c is open and both the step-up switch 104a and the step-down switch 104b are connected to the first end T1 of the transformer Tr, thereby disconnecting the automatic voltage regulator 104 from the UPS 100 and transferring the electrical energy directly from the alternating current input end 101 to the alternating current output end 107. In the normal mode, the charger 109 is controlled to convert alternating current from the automatic voltage regulator 104 into direct current to charge the rechargeable battery 108.
(2) When the voltage of the mains power is high, i.e. above the normal range but still in a safe range, the on-line interactive UPS 100 is controlled to be in an automatic voltage step-down regulation mode. Therein, the input switch 103 is controlled to be turned on and the output switch 105 is controlled to connect the automatic voltage regulator 104 to the alternating current output end 107. The transformer switch 104c is turned on, the step-up switch 104a is connected to the first end T1 of the transformer Tr, the step-down switch 104b is connected to the tap T3 of the transformer Tr, and the automatic voltage regulator 104 operates in the step-down mode. The electrical energy from the alternating current input end 101 is stepped down in voltage via the automatic voltage regulator 104 and then transmitted to the alternating current output end 107. In the automatic voltage step-down regulation mode, the charger 109 is controlled to convert alternating current from the automatic voltage regulator 104 into direct current to charge the rechargeable battery 108.
   For ease of understanding, in one embodiment, the normal range refers to a voltage in a range of 180 V-270 V, and the safe range refers to a voltage in a range of 160 V-180 V or 270 V-290 V.
(3) When the voltage of the mains power is relatively low, i.e. below the normal range but still within the safe range, the on-line interactive UPS 100 is controlled to be in an automatic voltage step-up regulation mode. Therein, the input switch 103 is controlled to be turned on and the output switch 105 is controlled to connect the automatic voltage regulator 104 to the alternating current output end 107. The transformer switch 104c is turned on, the step-up switch 104a is connected to the tap T3 of the transformer Tr, the step-down switch 104b is connected to the first end Tl of the transformer Tr, and the automatic voltage regulator 104 operates in the step-up mode. The electrical energy from the alternating current input end 101 is stepped up in voltage via the automatic voltage regulator 104 and then transmitted to the alternating current output end 107. In the automatic voltage step-up mode, the charger 109 is controlled to convert alternating current from the automatic voltage regulator 104 into direct current to charge the rechargeable battery 108.
(4) The on-line interactive UPS 100 is controlled to be in a first battery mode when the voltage of the mains power is abnormal (e.g. the voltage is out of the safe range or a voltage jump is greater than a threshold value). Therein, the input switch 103 is controlled to be turned off, and the output switch 105 is controlled to connect the battery 108 to the alternating current output end 107. The transformer switch 104c is turned off, and the step-up switch 104a and the step-down switch 104b are connected to the first end Tl of the transformer Tr. The electrical energy from the battery 108 is DC-converted by the DC/DC converter 110 and inverted by the inverter 111, and then output to the alternating current output end 107.

For ease of understanding, in the present disclosure, when both the step-up switch 104a and the step-down switch 104b are connected to the first end T1 of the transformer Tr, it is referred to as the normal mode of the automatic voltage regulator 104; when the transformer switch 104c is turned on, the step-up switch 104a is connected to the tap T3 of the transformer Tr, and the step-down switch 104b is connected to the first end T1 of the transformer Tr, it is referred to as the step-up mode of the automatic voltage regulator 104; when the transformer switch 104c is turned on, the step-up switch 104a is connected to the first end Tl of the transformer Tr, and the step-down switch 104b is connected to the tap T3 of the transformer Tr, it is referred to as the step-down mode of the automatic voltage regulator 104.

The automatic voltage regulator is usually connected to the circuit through a relay, an action of the relay often causes interference, and this phenomenon is more serious when the automatic voltage regulator is involved, because the automatic voltage regulator needs to reset the magnetic flux when it is disconnected. If there is no appropriate loop to absorb the excitation energy, it will cause serious interference, and then affect the sensitive devices in the circuit.

The inventors have found that in the case of the automatic voltage regulator working, after the control unit (e.g. MCU) has sampled an abnormality of the mains power, the control logic described above switches to the first battery mode, and at the same time at a side of the mains power the input switch 103 and the transformer switch 104c are turned off, and the step-up switch 104a and the step-down switch 104b are turned off (i.e. in the normal mode). At this time, an excitation current of the automatic voltage regulator 104 suddenly has no loop, and a very high voltage is induced at both ends across the transformer Tr. This high voltage of dv/dt may generate strong electromagnetic interference, and affect the normal operation of some sensitive devices (e.g. MCU).

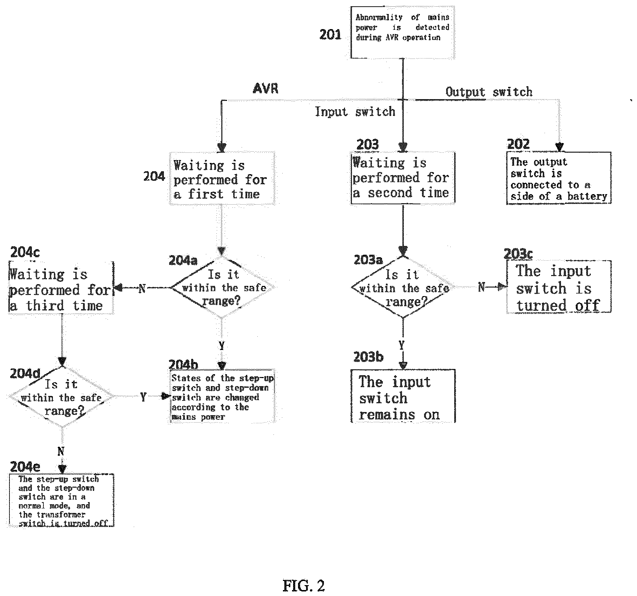

The present disclosure provides a method for suppressing interference in an uninterruptible power source. FIG. 2 shows a flowchart of a method for suppressing interference in an uninterruptible power source according to one embodiment of the present disclosure. As shown in FIG. 2, the method includes:
Step 201: in the case of the automatic voltage regulator working, when an abnormality of a mains power is detected, step 202, step 203, and step 204 are simultaneously executed.

The abnormality of the mains power means that the voltage of the mains power is out of the safe range or that the voltage jump of the mains power is greater than a threshold value, for example, greater than 40 V.

Step 202: the output switch is switched to a side of the battery and the UPS enters the second battery mode.

Therein, different from the first battery mode, in the second battery mode, only the output switch is switched to the side of the battery, and states of the other switches are not defined.

At this time, the UPS works in the second battery mode for at least a battery mode minimum working time (e.g. 5 seconds).

Step 204: when an abnormality of the mains power is detected, waiting is performed for a first time during which states of the step-up switch, the step-down switch, and the transformer switch remain unchanged. Step 204a is then performed to determine if the mains power is within the safe range. If so, step 204b is executed, states of the step-up switch, the step-down switch and the transformer switch are changed according to the mains power, and after the UPS works in the second battery mode for at least the battery mode minimum working time, the output switch switches to a side of the automatic voltage regulator; if not, step 204c is executed, and waiting is performed for a third time during which the states of the step-up switch, the step-down switch, and the transformer switch remain unchanged. Step 204d is then performed to determine if the mains power is within the safe range. If so, step 204b is executed, the states of the step-up switch, the step-down switch and the transformer switch are changed according to the mains power, and after the UPS works in the second battery mode for at least the battery mode minimum working time, the output switch switches to the side of the automatic voltage regulator; if not, step 204e is executed, the transformer switch is turned off, the step-up switch and the step-down switch are in the normal mode, and the UPS continues to work in the second battery mode.

In one embodiment, a mains power abnormality flag bit is set, and when the abnormality of the mains power is detected, the mains power abnormality flag bit is set to a position (e.g. set to 1). While waiting is performed for the first time and the third time, the control unit reads a state of the mains power at regular intervals (e.g. 20 ms), determines whether the mains power is within the safe range, and zero clears the mains power abnormality flag bit once it is detected that the mains power is within the safe range. Therefore, in steps 204a and 204d, it is also possible to determine whether the mains power is within the safe range by determining whether the mains power abnormality flag bit is zero cleared. By setting the mains power abnorrnality flag bit, it can be easily determined whether the mains power is within the safe range, simplifying the operation process.

In one embodiment, the first time and the third time are equal, each being 400 ms. In one embodiment, the first time and the third time are in a range of 200 ms-1000 ms. In one embodiment, the third time is less than the first time such that the sensitivity of system detection can be increased.

In one embodiment, in step 204b, the step-up switch and the step-down switch switch states when a phase of the mains power is 90° or 270° (i.e. when the voltage of the mains power is a peak value). Since a phase of the excitation current differs from a phase of the voltage of the mains power by 90°, the excitation current is 0 at this time, and the actions of the step-up switch and the step-down switch do not generate an induced voltage at both ends across the transformer. In one embodiment, in step 204b, the step-up switch and the step-down switch switch states when the phase of the mains power is 80°-100° or 260°-280°. At this time, the excitation current is relatively small, the interference is relatively small, and the uninterruptible power source will not be interfered with.

In step 204b, when it is detected that the mains power is relatively low, the step-up switch and the step-down switch are configured to be in the step-up mode; when it is detected that the mains power is relatively high, the step-up switch and the step-down switch are configured to be in the step-down mode; when the mains power is detected to be in the normal range, the step-up switch and the step-down switch are configured to be in the normal mode.

In one embodiment, in step 204e, original states of the step-up switch, the step-down switch, and the transformer switch may also be maintained unchanged, since at this time, the input switch has been turned off, and the states of the step-up switch, the step-down switch, and the transformer switch do not affect the uninterruptible power source.

Although in the above-described embodiment, the steps of waiting are performed twice, i.e. step 204 and step 204c, it will be understood by a person skilled in the art that more or less steps of waiting may be provided. For example, after step 204d, if not, waiting is continued for a fourth time, and then it is determined whether the mains power is within the safe range. If so, step 204b is performed; if not, step 204e is performed. In one embodiment, the fourth time is less than the third time. In one embodiment, the fourth time, the third time, and the first time are equal.

In one embodiment, after step 204e, the UPS may continue to read the state of the mains power, and if it is determined that the mains power is within the safe range, step 204b may be further executed.

Step 203: when the abnormality of the mains power is detected, waiting is performed for the second time, during which the state of the input switch remains unchanged. Step 203a is then performed to determine if the mains power is within the safe range. If yes, step 203b is executed, and the input switch is kept turned on; if not, step 203c is performed in which the input switch is turned off.

In one embodiment, while waiting is performed for the second time, the control unit reads a state of the mains power at regular intervals (e.g. 20 ms), determines whether the mains power is within the safe range, and zero clears the mains power abnormality flag bit once it is detected that the mains power is within the safe range. Therefore, in steps 203a it is also possible to determine whether the mains power is within the safe range by determining whether the mains power abnormality flag bit is zero cleared.

Based on the operating specification of UPS, when the mains power is abnormal, the input switch needs to be turned off within 1 second, i.e. 1 second is counted from the mains power abnormality flag bit set to a position. The second time is therefore less than 1 second. In one embodiment, the second time is 600 ms. In one embodiment, the second time is in a range of 200 ms-1000 ms.

In one embodiment, the second time is greater than the first time, and the second time is less than a sum of the first time and the third time to ensure that the input switch can be turned off before the step-up switch, the step-down switch, and the transformer switch are switched, and at this time the action of the step-up switch, the step-down switch, and the transformer switch do not interfere with the uninterruptible power source. In one embodiment, the second time is greater than or equal to the time for the automatic voltage regulator to decay or reset the excitation current after the mains power failure, i.e. the second time is long enough to ensure that the excitation current decays or resets to zero through the loop of the mains power when the mains power is actually lost.

In one embodiment, after the input switch is turned off at step 203c, the UPS may continue to read the state of the mains power, and if it is determined that the mains power is within the safe range, step 203b may be further executed to turn on the input switch.

The method for suppressing interference in an uninterruptible power source according to the present disclosure will now be described with reference to three specific embodiments, in which the first time is 400 ms, the second time is 600 ms, and the third time is 400 ms.

In the first embodiment, when the mains power jumps from the low voltage to the high voltage, the control unit detects the abnormality of the mains power, the mains power abnormality flag bit is set to the position, the output switch is switched to the side of the battery, and the UPS enters the second battery mode. The step-up switch, the step-down switch, and the transformer switch remain in an initial step-up mode for a period of 400 ms thereafter. After more than 400 ms, the control unit detects that the mains power is within the safe range and the mains power abnormality flag bit is zero cleared. At this time, the mains power is in a high voltage state, the step-up switch and the step-down switch are switched to the step-down mode when the phase of the mains power is 90°. Since a phase of the excitation current differs from a phase of the voltage of the mains power by 90°, the excitation current is 0 at this time, and the actions of the switches do not generate an induced voltage at both ends across the transformer. Within 600 ms after the mains power abnormality flag bit is set to the position, the input switch is kept on; after 600 ms, it is detected that the mains power abnormality flag bit is zero cleared, and the input switch continues to be kept on. At this time, after the UPS works in the second battery mode for 5 seconds (the battery mode minimum working time), the output switch is switched to the side of the automatic voltage regulator, and the UPS enters the step-down mode and continues to work.

In the second embodiment, when the mains power jumps from the high voltage to the low voltage, the control unit detects the abnormality of the mains power, the mains power abnormality flag bit is set to the position, the output switch is switched to the side of the battery, and the UPS enters the second battery mode. The step-up switch, the step-down switch, and the transformer switch remain in an initial step-down mode for a period of 400 ms thereafter. After more than 400 ms, the control unit detects that the mains power is within the safe range and the mains power abnormality flag bit is zero cleared. At this time, the mains power is in a low voltage state, the step-up switch and the step-down switch are switched to the step-up mode when the phase of the mains power is 90°. Since a phase of the excitation current differs from a phase of the voltage of the mains power by 90°, the excitation current is 0 at this time, and the actions of the switches do not generate an induced voltage at both ends across the transformer. Within 600 ms after the mains power abnormality flag bit is set to the position, the input switch is kept on; after 600 ms, it is detected that the mains power abnormality flag bit is zero cleared, and the input switch continues to be kept on. At this time, after the UPS works in the second battery mode for 5 seconds (the battery mode minimum working time), the output switch is switched to the side of the mains power, and the UPS enters the step-down mode and continues to work.

In the third embodiment, when the mains power is actually turned off, the control unit detects the abnormality of the mains power, the mains power abnormality flag bit is set to the position, the output switch is switched to the side of the battery, and the UPS enters the second battery mode. During 600 ms after the mains power failure, the input switch remains in a closed state and the automatic voltage regulator is clamped on both ends by a mains power end and the voltage is 0. After 600 ms, the input switch is turned off. The transformer switch, the step-up switch and the step-down switch are maintained in the original state for 800 ms after the mains power is turned off. After 800 ms, the step-up switch and the step-down switch are switched to the normal mode, the transformer switch is turned off, the automatic voltage regulator is not connected to the UPS circuit, and the UPS continues to work in the second battery mode.

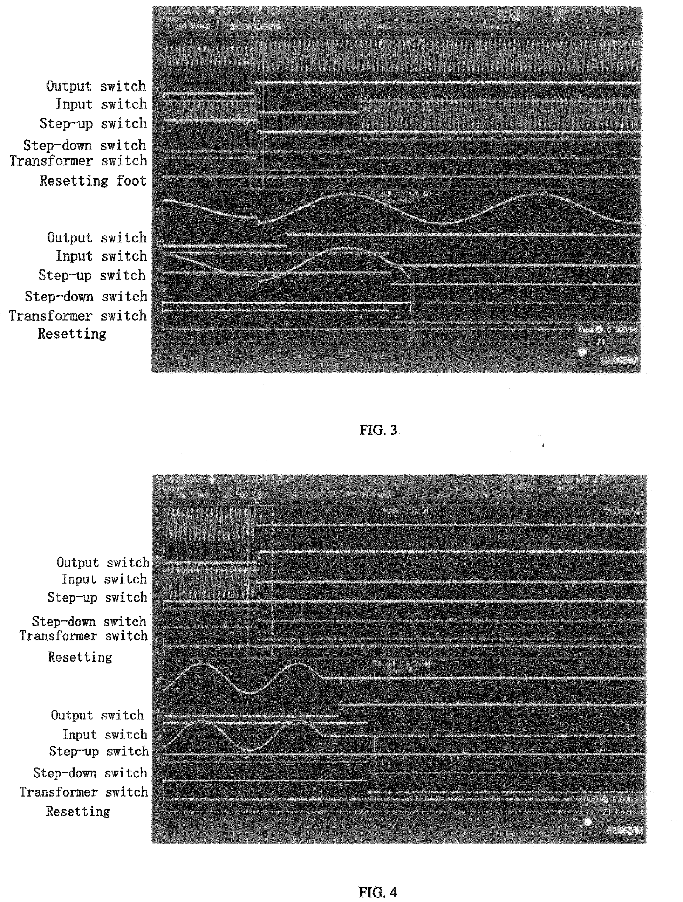

FIG. 3 shows a waveform schematic diagram when the mains power jumps from a low voltage to a high voltage in the prior art. FIG. 4 shows a waveform schematic diagram of the mains power in case of a high voltage power dropout in the prior art. Here, in FIG. 3 and FIG. 4, the lower diagrams are enlarged views of the waveforms at block positions in the upper diagrams. It can be seen from the waveform that after the MCU detects the abnormality of the mains power, the output switch, the input switch, the step-up switch and the transformer switch all act rapidly in a short time, resulting in that the excitation energy inside the automatic voltage regulator does not have a loop release, and a very high peak voltage is generated at both ends across the transformer, and this high dv/dt voltage generates a great interference at the reset pin of the MCU, which may cause the MCU to reset.

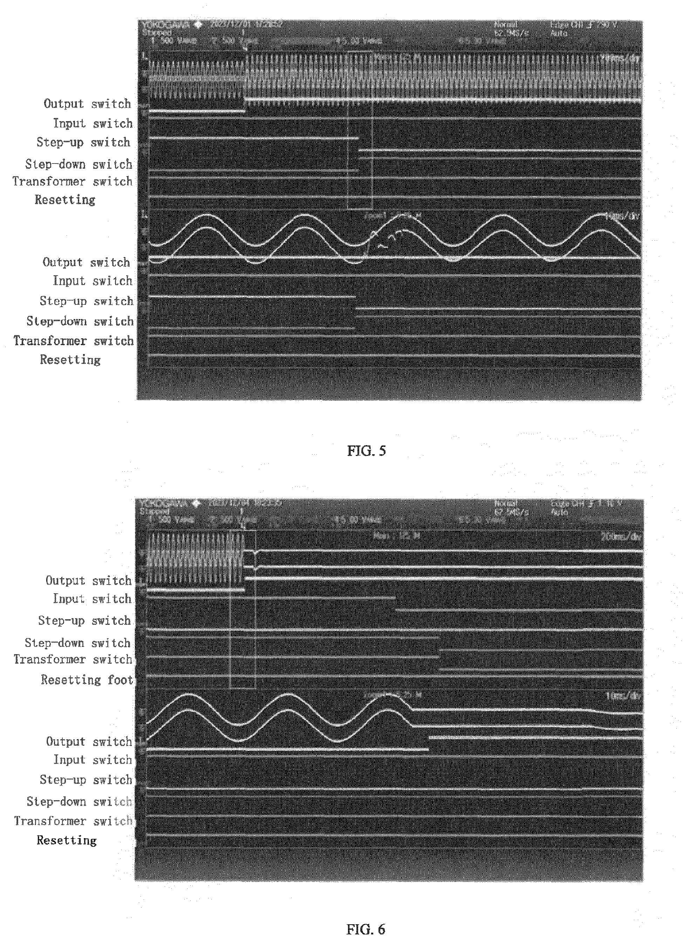

FIG. 5 shows a waveform schematic diagram when the mains power jumps from a low voltage to a high voltage using the method of the present disclosure. FIG. 6 shows a waveform schematic diagram of the mains power in case of a high voltage power dropout using the method of the present disclosure. Here, in FIG. 5 and FIG. 6, the lower diagrams are enlarged views of the waveforms at the block positions in the upper diagrams. It can be seen from the waveform that after the MCU detects the abnormality of the mains power, the output switch rapidly acts, and the input switch selects to act or not to act according to the state of the mains power after 600 ms. In

FIG. 5, the step-up switch and the step-down switch and the transformer switch act at the phase of 270° according to the state of the mains power after 400 ms to ensure that the excitation current is 0; in FIG. 6, the step-up switch, the step-down switch, and the transformer switch act according to the state of the mains state after 800 ms, so as to ensure that the automatic voltage regulator has sufficient time to discharge the excitation energy through the loop of the mains power, and no voltage spike is generated at both ends across the automatic voltage regulator.

The present disclosure completely and effectively suppresses the interference by eliminating the interference source. The method for suppressing interference in an uninterruptible power source according to the present disclosure selects whether to turn off the input switch according to the state of the mains power after the second time, and the step-up switch, the step-down switch and the transformer switch act according to the state of the mains power after the first time and the third time, so as to ensure that the automatic voltage regulator has sufficient time to discharge the excitation energy through the loop of the mains power, and no voltage spike is generated at both ends across the automatic voltage regulator. The method for suppressing interference in an uninterruptible power source of the present disclosure can eliminate the source of interference by improving the logic to eliminate excitation energy or creating an excitation energy bleed loop with an existing line without adding extra lines, i.e. without adding any cost.

Although the present disclosure has been described in terms of preferred embodiments, it is not intended to be limited to the embodiments described herein, but is intended to cover various modifications and variations that may be made without departing from the scope of the present disclosure.

## Claims

1. An uninterruptible power source, comprising an input switch, an output switch, and an automatic voltage regulator connected between the input switch and the output switch, the output switch being selectively connected to one of the automatic voltage regulator and a battery, the automatic voltage regulator comprising a step-up switch, a step-down switch, and a transformer switch, and the uninterruptible power source being configured such that:
in the case of the automatic voltage regulator working, when an abnormality of an input voltage is detected, the output switch is connected to a side of the battery to enter a second battery mode, waiting is performed for a first time, and then states of the step-up switch, the step-down switch, and the transformer switch are controlled according to the input voltage; and waiting is performed for a second time, and then a state of the input switch is controlled according to the input voltage, wherein the second time is greater than the first time.

2. The uninterruptible power source according to claim 1, wherein, after waiting is performed for the first time, if the input voltage is not within a safe range, waiting is continued for a third time, and then the states of the step-up switch, the step-down switch, and the transformer switch are controlled according to the input voltage.

3. The uninterruptible power source according to claims 1 or 2, wherein the states of the step-up switch, the step-down switch, and the transformer switch are changed according to the input voltage if the input voltage is within a safe range, and the uninterruptible power source controls the output switch to switch to a side of the automatic voltage regulator after working in the second battery mode for at least a battery mode minimum working time.

4. The uninterruptible power source according to claim 2, wherein, after waiting is continued for the third time, if the input voltage is not within the safe range, the transformer switch is controlled to turn off, the step-up switch and the step-down switch are in a normal mode, and the uninterruptible power source continues to work in the second battery mode.

5. The uninterruptible power source according to claim 1, wherein after waiting is performed for the second time, if the input voltage is within a safe range, the input switch is kept on; and if the input voltage is not within the safe range, the input switch is turned off.

6. The uninterruptible power source according to claim 5, wherein the uninterruptible power source continues to read a state of the input voltage after the input switch is turned off, and the input switch is turned on if the input voltage is within the safe range.

7. The uninterruptible power source according to claim 1, wherein an input voltage abnormality flag bit is set to determine whether the input voltage is within a safe range by determining whether the input voltage abnormality flag bit is zero cleared.

8. The uninterruptible power source according to claim 2, wherein the second time is greater than or equal to a time for the automatic voltage regulator to decay or reset an excitation current after the input voltage is de-energized, and the second time is less than a sum of the first time and the third time.

9. The uninterruptible power source according to claim 3, wherein the step-up switch and the step-down switch switch states when a phase of the input voltage is 80°-100° or 260°-280°.

10. A method for suppressing interference in an uninterruptible power source, comprising:
in the case of an automatic voltage regulator in the uninterruptible power source working, when an abnormality of an input voltage is detected, an output switch of the uninterruptible power source is controlled to be connected to a side of a battery, waiting is performed for a first time, and then states of a step-up switch, a step-down switch, and a transformer switch of the automatic voltage regulator are controlled according to the input voltage; and waiting is performed for a second time, and then a state of an input switch of the uninterruptible power source is controlled according to the input voltage, wherein the second time is greater than the first time.
